# EUROPEAN PATENT APPLICATION

(11) **EP 3 944 456 A1**
(43) Date of publication of application: **26.01.2022**
(21) Application number: 21181672.3
(22) Date of filing: 25.06.2021
(51) Int. Cl.: H02J 7/00, B60L 58/19, H01M 10/42

(54) **SWITCHABLE BATTERY MANAGEMENT SYSTEM**

(30) Priority: 23.07.2020 US 202063055634 P
(71) Applicant: Aurora Flight Sciences Corporation, a subsidiary of The Boeing Company, Manassas VA 20110 (US)
(72) Inventor: MCLEAN, CHRISTOPHER, Manassas, VA 20110 (US); SIVAN, ARUN, Manassas, VA 20110 (US); TAYLOR, MASON MCKENZIE, Manassas, VA 20110 (US)
(74) Representative: Sandri, Sandro

(57) **Abstract**

The present disclosure relates to battery system having a plurality of battery modules (206) and a battery management system (208). The plurality of battery modules (206) are arranged in series to define a battery string. Each of the plurality of battery modules (206) comprises a supervisory circuit (228), one or more cell packs (224), and one or more switches (238) to electrically connect the one or more cell packs (224) to the battery string (204). The battery management system (208) to selectively switch, for each of the plurality of battery modules, the one or more switches (238) between a first position that electrically places the one or more cell packs (224) in series with the battery string and a second position that electrically bypasses the one or more cell packs (224) from the battery string. The battery management system (208) is configured to electrically couple the battery string with a battery bus via a string switch.

## Description

### FIELD

The present disclosure relates to battery power systems and methods, such as those suitable for use with aircraft.

### BACKGROUND

The concept of electric, hybrid-electric, and solar-powered aircraft has been demonstrated by a number of aerial vehicle research projects. These power systems typically employ a battery array (or similar battery systems) to provide and/or store power necessary for operation of the aircraft (or other vehicle).

The battery array may include one or more battery packs employing one or more battery cells of various chemistries, such as lithium-based cells. Lithium-polymer cells, for example, are higher in specific energy density per unit weight than most other battery chemistries; including nickel cadmium, lead acid, silver oxide, mercury, and alkaline dry cells. Furthermore, lithium-polymer cells have a higher voltage output per cell than many other systems; therefore, fewer cells are needed to achieve a given battery voltage. During operation, however, the state of health and state of charge levels of the various battery cells within a battery array can fluctuate as the battery cells age and are charged/discharged. Such fluctuations may be monitored and addressed to ensure continued, safe operation of the aircraft.

Therefore, a need exists for battery management systems and associated methods to address these fluctuations, while overcoming the deficiencies of the prior battery systems, such as increased size, weight, and cost.

### SUMMARY

The present disclosure relates to battery power systems and methods, such as those suitable for use with aircraft. The disclosed power systems and methods address fluctuations by electrically connecting and disconnecting portions of the battery array as a function of state of charge, state of health, and power demands (*e.g*., loads), while overcoming the deficiencies of prior battery systems, such as increased size, weight, and cost.

According to a first aspect, a method for controlling a battery system is disclosed, where the battery system comprises a plurality of battery modules arranged in series to define a battery string, each of the plurality of battery modules comprising a supervisory circuit, one or more cell packs, and one or more switches to electrically connect the one or more cell packs to the battery string, and a battery management system to selectively switch, for each of the plurality of battery modules, the one or more switches between a first position that electrically places the one or more cell packs in series with the battery string and a second position that electrically bypasses the one or more cell packs from the battery string. The method comprises identifying a first battery module from the plurality of battery modules to bypass from the battery string, identifying a second battery module from the plurality of battery modules to place in series with the battery string, switching the one or more switches of the first battery module to the second position, and switching the one or more switches of the second battery module to the first position.

In certain aspects, each of the one or more cell packs comprises two or more battery cells arranged electrically in parallel.

In certain aspects, the method further comprises the step of connecting the battery string with the battery bus via a pre-charge circuit, wherein the pre-charge circuit comprises a pre-charge switch that is coupled electrically in series with a pre-charge resistor to limit current flow through the pre-charge switch.

In certain aspects, the method further comprises the step of identifying a defective battery module among the plurality of battery modules, wherein the first battery module is the defective battery module.

In certain aspects, the second battery module is a reserve battery module.

In certain aspects, the method further comprises the steps of converting, via an analog-to-digital converter (ADC) of the supervisory circuit, an analog signal representing current flow through the one or more cell packs to a digital signal, and communicating the digital signal to the battery management system.

In certain aspects, the method further comprises the step of switching, via the battery management system, the one or more switches in a break-before-make (BBM) arrangement.

In certain aspects, each of the one or more switches is a solid-state switch.

In certain aspects, the solid-state switch is a silicon carbide metal-oxide-semiconductor field-effect transistor (MOSFET).

In certain aspects, the string switch is a solid-state switch.

In certain aspects, the solid-state switch is a silicon carbide metal-oxide-semiconductor field-effect transistor (MOSFET).

According to a second aspect, a battery system comprises: a plurality of battery modules arranged in series to define a battery string, each of the plurality of battery modules comprising a supervisory circuit, one or more cell packs, and one or more switches to electrically connect the one or more cell packs to the battery string ; and a battery management system to selectively switch, for each of the plurality of battery modules, the one or more switches between a first position that electrically places the one or more cell packs in series with the battery string and a second position that electrically bypasses the one or more cell packs from the battery string, wherein the battery management system is configured to electrically couple the battery string with a battery bus via a string switch, and wherein the battery management system is configured to: identify a first battery module from the plurality of battery modules to bypass from the battery string, identify a second battery module from the plurality of battery modules to place in series with the battery string, switch the one or more switches of the first battery module to the second position, and switch the one or more switches of the second battery module to the first position.

In certain aspects, each of the one or more cell packs comprises two or more battery cells arranged electrically in parallel.

In certain aspects, the battery management system selects the second battery module to substantially maintain an output voltage of the battery string.

In certain aspects, the second battery module is a reserve battery module.

In certain aspects, the battery management system is configured to identify a defective battery module among the plurality of battery modules.

In certain aspects, the first battery module is the defective battery module.

In certain aspects, each of the one or more switches is a solid-state switch.

In certain aspects, the string switch is a solid-state switch.

In certain aspects, the battery management system is configured to switch simultaneously (1) the one or more switches of the first battery module to the second position and (2) the one or more switches of the second battery module to the first position.

In certain aspects, the supervisory circuit comprises a current sensor and an analog-to-digital converter (ADC), wherein the current sensor is configured to output an analog signal representing current flow through the one or more cell packs and the ADC is configured to convert the analog signal to a digital signal.

In certain aspects, the supervisory circuit is configured to communicate the digital signal to the battery management system.

In certain aspects, the battery system further comprises a second plurality of battery modules arranged to define a second battery string defining a second output voltage, wherein the second battery string is arranged electrically in parallel to the battery string via a second string switch.

In certain aspects, the battery management system is configured to electrically couple the second battery string with the battery bus via the second string switch.

In certain aspects, the battery management system is configured to electrically couple the battery string with the battery bus via a pre-charge circuit configured to perform a pre-charge cycle.

In certain aspects, the pre-charge circuit comprises a pre-charge switch that is coupled electrically in series with a pre-charge resistor to limit current flow through the pre-charge switch.

In certain aspects, the solid-state switch is a silicon carbide metal-oxide-semiconductor field-effect transistor (MOSFET).

In certain aspects, the solid-state switch is a silicon carbide metal-oxide-semiconductor field-effect transistor (MOSFET).

In certain aspects, the battery management system is configured to switch the one or more switches in a break-before-make (BBM) arrangement.

According to a third aspect, a battery system comprises: a first plurality of battery modules arranged in series to define a first battery string having an first output voltage; a second plurality of battery modules arranged to define a second battery string defining a second output voltage, wherein the second battery string is arranged electrically in parallel to the first battery string via a second string switch, wherein each of the first and second pluralities of battery modules comprises a supervisory circuit, one or more cell packs, and one or more switches to electrically connect the one or more cell packs to its respective first or second battery string ; and a battery management system to selectively switch, for each of the plurality of battery modules, the one or more switches between a first position that electrically places the one or more cell packs in series with its respective first or second battery string and a second position that electrically bypasses the one or more cell packs from the its respective first or second battery string, wherein the battery management system is configured to: identify a first battery module from the first plurality of battery modules to bypass from the first battery string, identify a second battery module from the first plurality of battery modules to place in series with the first battery string, switch the one or more switches of the first battery module to the second position, and switch the one or more switches of the second battery module to the first position.

In certain aspects, each of the one or more cell packs comprises two or more battery cells arranged electrically in parallel.

In certain aspects, the battery management system is configured to identify a defective battery module among the plurality of battery modules, wherein the first battery module is the defective battery module.

In certain aspects, the supervisory circuit comprises a current sensor and an analog-to-digital converter (ADC), wherein the current sensor is configured to output an analog signal representing current flow through the one or more cell packs and the ADC is configured to convert the analog signal to a digital signal.

In certain aspects, the battery management system is configured to electrically couple the first battery string or the second battery string with the battery bus via a pre-charge circuit configured to perform a pre-charge cycle.

In certain aspects, the pre-charge circuit comprises a pre-charge switch that is coupled electrically in series with a pre-charge resistor to limit current flow through the pre-charge switch.

In certain aspects, each of the one or more switches is a silicon carbide metal-oxide-semiconductor field-effect transistor (MOSFET).

In certain aspects, the string switch is a silicon carbide metal-oxide-semiconductor field-effect transistor (MOSFET).

In certain aspects, the second battery module is a reserve battery module.

### DRAWINGS

The foregoing and other objects, features, and advantages of the devices, systems, and methods described herein will be apparent from the following description of particular embodiments thereof, as illustrated in the accompanying figures; where like reference numbers refer to like structures. The figures are not necessarily to scale, emphasis instead being placed upon illustrating the principles of the devices, systems, and methods described herein.
Figure 1 illustrates a perspective view of an example aircraft suitable for use with the battery system in accordance with one aspect.
Figure 2a illustrates a block diagram of an example power system of the example aircraft of Figure 1, the power system including an example battery system.
Figure 2b illustrates a block diagram of the battery system of the power system of Figure 2a.
Figure 2c illustrates a block diagram of a battery module of the battery system of Figure 2b in accordance with a first aspect.
Figure 2d illustrates a detailed view of the supervisory circuit of the battery module of Figure 2c.
Figure 2e illustrates a block diagram of a battery module of the battery system of Figure 2b in accordance with a second aspect.
Figure 2f illustrates a detailed view of the supervisory circuit of the battery module of Figure 2e.
Figure 3 illustrates a block diagram of a battery management system of the battery system of Figure 2b.
Figures 4a and 4b illustrates a block diagram of a battery string with a reserve battery module.
Figure 5 illustrates an example method for controlling a battery system with a reserve battery module.

### DESCRIPTION

References to items in the singular should be understood to include items in the plural, and vice versa, unless explicitly stated otherwise or clear from the text. Grammatical conjunctions are intended to express any and all disjunctive and conjunctive combinations of conjoined clauses, sentences, words, and the like, unless otherwise stated or clear from the context. Recitation of ranges of values herein are not intended to be limiting, referring instead individually to any and all values falling within the range, unless otherwise indicated herein, and each separate value within such a range is incorporated into the specification as if it were individually recited herein. In the following description, it is understood that terms such as "first," "second," "top," "bottom," "side," "front," "back," and the like are words of convenience and are not to be construed as limiting terms.

As used herein, the terms "about," "approximately," "substantially," or the like, when accompanying a numerical value, are to be construed as indicating a deviation as would be appreciated by one of ordinary skill in the art to operate satisfactorily for an intended purpose. Ranges of values and/or numeric values are provided herein as examples only, and do not constitute a limitation on the scope of the described embodiments. The use of any and all examples, or exemplary language ("e.g.," "such as," or the like) provided herein, is intended merely to better illuminate the embodiments and does not pose a limitation on the scope of the embodiments. The terms "e.g.," and "for example" set off lists of one or more non-limiting examples, instances, or illustrations. No language in the specification should be construed as indicating any unclaimed element as essential to the practice of the embodiments.

As used herein, the terms "aerial vehicle" and "aircraft" are used interchangeably and refer to a machine capable of flight, including, but not limited to, both traditional runway and vertical takeoff and landing ("VTOL") aircraft, and also including both manned and unmanned aerial vehicles ("UAV"). VTOL aircraft may include fixed-wing aircraft (*e.g.*, Harrier jets), rotorcraft (*e.g.*, helicopters, multirotor, etc.), and/or tilt-rotor/tilt-wing aircraft.

As used herein, the term "and/or" means any one or more of the items in the list joined by "and/or." As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y, and z."

As used herein, the terms "circuits" and "circuitry" refer to physical electronic components (*i.e.*, hardware) and any software and/or firmware ("code"), which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code.

As used herein, the term "composite material" as used herein, refers to a material comprising an additive material and a matrix material. For example, a composite material may comprise a fibrous additive material (*e.g*., fiberglass, glass fiber ("GF"), carbon fiber ("CF"), aramid/para-aramid synthetic fibers, etc.) and a matrix material (*e.g*., epoxies, polyimides, and alumina, including, without limitation, thermoplastic, polyester resin, polycarbonate thermoplastic, casting resin, polymer resin, acrylic, chemical resin). In certain aspects, the composite material may employ a metal, such as aluminum and titanium, to produce fiber metal laminate (FML) and glass laminate aluminum reinforced epoxy (GLARE). Further, composite materials may include hybrid composite materials, which are achieved via the addition of some complementary materials (*e.g*., two or more fiber materials) to the basic fiber/epoxy matrix.

As used herein, the terms "communicate" and "communicating" refer to (1) transmitting, or otherwise conveying, data from a source to a destination, and/or (2) delivering data to a communications medium, system, channel, network, device, wire, cable, fiber, circuit, and/or link to be conveyed to a destination.

As used herein, the term "processor" means processing devices, apparatuses, programs, circuits, components, systems, and subsystems, whether implemented in hardware, tangibly embodied software, or both, and whether or not it is programmable. The term "processor" as used herein includes, but is not limited to, one or more computing devices, hardwired circuits, signal-modifying devices and systems, devices and machines for controlling systems, central processing units, programmable devices and systems, field-programmable gate arrays, application-specific integrated circuits, systems on a chip, systems comprising discrete elements and/or circuits, state machines, virtual machines, data processors, processing facilities, and combinations of any of the foregoing. The processor may be, for example, any type of general purpose microprocessor or microcontroller, a digital signal processing (DSP) processor, an application-specific integrated circuit (ASIC). The processor may be coupled to, or integrated with a memory device. The memory device can be any suitable type of computer memory or any other type of electronic storage medium, such as, for example, read-only memory (ROM), random access memory (RAM), cache memory, compact disc read-only memory (CDROM), electro-optical memory, magneto-optical memory, programmable read-only memory (PROM), erasable programmable read-only memory (EPROM), electrically-erasable programmable read-only memory (EEPROM), a computer-readable medium, or the like.

As used herein, circuitry or a device is "operable" of "configured" to perform a function whenever the circuitry or device comprises the necessary hardware and code (if any is necessary) to perform the function, regardless of whether performance of the function is disabled, or not enabled (*e.g*., by a user-configurable setting, factory trim, etc.).

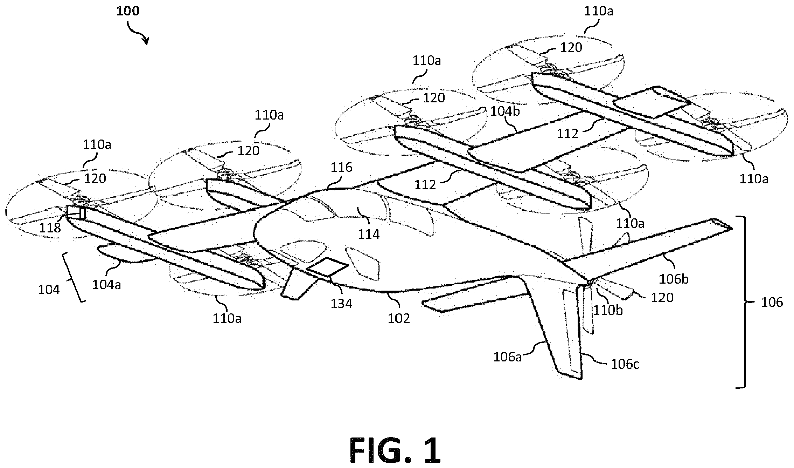

Figure 1 illustrates a perspective view of an example aircraft 100 suitable for use with the battery system in accordance with one aspect. The aircraft 100 generally comprises an airframe 102 (*e.g.*, a fuselage) having a wing set 104 having a starboard-side wing 104a and a port-side wing 104b. While the wing set 104 is illustrated as generally linear with tapered outboard wing tips, other wing configurations are contemplated, such as back-swept, non-tapered, rectangular, elliptical, forward-swept, and the like. The airframe 102 further includes an empennage 106 with one or more vertical stabilizers 106a and/or horizontal stabilizers 106b, which may be configured in one of multiple tail configurations. To assist with controlled flight, the aircraft 100 may further comprise one or more moveable control surfaces. For example, each of the wing set 104 and/or vertical stabilizers 106a may include a fixed leading section and a moveable portion pivotally coupled to a trailing edge of the fixed leading section, such as one or more trailing edge flaps, trim tabs, and/or rudder 106c.

The aircraft 100 can be configured to carry passengers and/or cargo. As illustrated, the airframe 102 includes a cockpit/cabin 114 for one or more human operators and/or passengers. The aircraft 100 may be used as, for example, an air taxi, emergency vehicle (*e.g*., ambulance), pleasure craft, cargo transport, etc. The illustrated cockpit/cabin 114 includes a forward facing transparent aircraft canopy 116 that may be fabricated from, for example, a glass material, and/or an acrylic material. The aircraft 100 is generally illustrated as having a cockpit for manned operation, but may also be configured as unmanned (*i.e.*, requiring no onboard pilot) or as both unmanned and fully autonomous (*i.e.*, requiring neither an onboard pilot nor a remote control pilot). For example, the aircraft 100 may be remotely controlled over a wireless communication link by a human operator, computer operator (*e.g*., remote autopilot), or base station. In an unmanned arrangement, the cockpit/cabin 114 may be omitted.

The various structural components of the aircraft 100 may be fabricated from metal, a metal alloy, a composite material, wood, plastic (or other polymer), or a combination thereof. In certain aspects, portions of the aircraft 100 (*e.g.*, the airframe 102 and/or the wing set 104) may be fabricated using one or more additive manufacturing/3D printing techniques, such as fused deposition modeling (FDM), stereolithography (SLA), selective laser sintering (SLS), and/or any other suitable type of additive manufacturing/3D printing.

To facilitate cruise operation and VTOL operation, the illustrated aircraft 100 includes a plurality of propulsors 110 (*e.g.*, VTOL propulsors 110a and cruise propulsors 110b) to generate thrust. The plurality of propulsors 110 may be positioned on the airframe 102, the wing set 104, the empennage 106, one or more booms 112, or a combination thereof. The propulsors 110 may spin in a clockwise or a counter-clockwise direction about its respective axis of rotation, which may be a fixed axis of rotation or a pivoting axis of rotation (*e.g.*, a tilt wing or tilt rotor configuration). In certain aspects, propulsors 110 on one side of the airframe 102 may spin in a clockwise direction, while the VTOL propulsors 110a on the other side of the airframe 102 may spin in a counter-clockwise direction. One of skill in the art would appreciate that the blade pitch of the rotor blades would be adjusted depending on the rotational direction. The number and locations of the propulsors 110 shown in Figure 1 are merely for example, and can vary as desired.

Each of the propulsors 110 generally comprises an electric motor 118 coupled to, and configured to drive/rotate, a propeller 120 about its axis of rotation to generate thrust. Each of the plurality of propulsors 110 may be oriented to direct thrust to facilitate controlled flight, which, in the case of the illustrated aircraft 100, includes both VTOL and cruise operation. Although each propulsor 110 is illustrated as including a propeller 120 with four rotor blades, the propeller 120 may include a different number of blades in other embodiments.

During the VTOL operation, the plurality of VTOL propulsors 110a coupled to the wing set 104 are oriented to generate a vertical thrust relative to the airframe 102 (lifting thrust) to provide lift to the airframe 102 (*e.g.*, parallel to the yaw axis of the aircraft 100). During the cruise operation, the one or more cruise propulsors 110b coupled to the aft end of the airframe 102 are oriented to generate a horizontal thrust (a cruise thrust) relative to the airframe 102 (*e.g.*, parallel to the roll axis of the aircraft 100).

While illustrated as coupled to the wing set 104 via one or more booms 112, the plurality of VTOL propulsors 110a can alternatively or additionally be coupled directly to the wing set 104 or to other structural components of the aircraft to provide vertical thrust, such as the airframe 102, empennage 106, etc. Similarly, while a single cruise propulsor 110b is illustrated as coupled to the airframe 102 at its aft end to provide horizontal thrust, one or more VTOL propulsors 110a may instead be coupled to other structural components of the aircraft 100 (*e.g.*, the wing set 104, the empennage 106, etc.) to provide horizontal thrust (*e.g*., curing cruise operation). The one or more cruise propulsors 110b may be arranged in either a pusher configuration (as illustrated) or a tractor configuration.

During the VTOL operation the VTOL propulsors 110a are driven (*e.g*., via the electric motor 118) to generate vertical thrust to provide vertical lift to enable the aircraft 100 to take-off, hover, and land. During the cruise operation, the wing set 104 sustains wing-borne flight for the aircraft 100, thus unloading the plurality of VTOL propulsors 110a. As will be appreciated by those of ordinary skill in the art, wing-borne flight refers to the type of flight where lift is provided to an aircraft via one or more airfoils (*e.g.*, wing set 104), thereby obviating the need for vertical thrust (*e.g.*, from the VTOL propulsors 110a). When aircraft 100 transitions from a VTOL operation to cruise operation, the VTOL propulsors 110a are typically not operating (*e.g.*, not driven).

The aircraft 100 includes a power system 134 to supply power to, and control operation of, the aircraft 100 (and its various components). The power system 134 may include, *inter alia,* battery system, controllers (*e.g.*, motor controllers), a flight controller system, etc. As will be explained below, the power system 134 can be embedded in and/or distributed throughout the example aircraft 100. In other words, the power system 134 (or portions thereof) may be embedded into the aircraft 100.

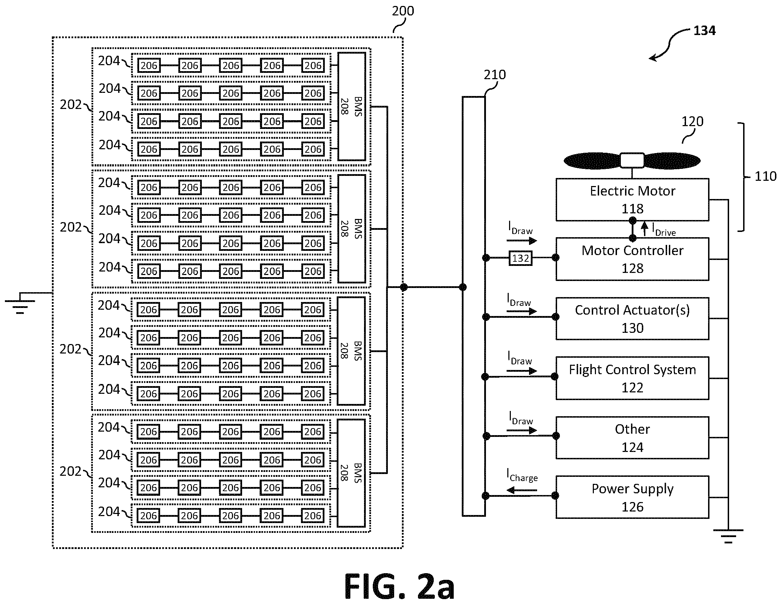

Figure 2a illustrates a block diagram of an example power system 134 with an on-board battery system 200 for the example aircraft 100 of Figure 1. The aircraft 100 uses the battery system 200 to power its various electric loads. By way of illustration, battery system 200 of the aircraft 100 may provide, in aggregate, about 1 kWh to 1 MWh in total energy storage to the aircraft 100 when fully charged. As can be appreciated, however, the amount of energy storage can be increased or decreased by adjusting the number of batteries or battery cells in the battery system 200 to achieve a desired amount of energy storage. A battery bus 210 electrically couples, whether directly or indirectly, the battery system 200 with the various electric loads and power supplies of the aircraft 100, thereby facilitating charge and discharge of the battery system 200.

Electric loads that receive a current draw (I_{Draw}) from the battery system 200 to discharge the battery system 200 may include, for example, electric motors 118 (whether directly or via a motor controller 128 as illustrated), motor controllers 128, control actuators 130 (*e.g.*, those to control flight surfaces, such as wing and tail servos), flight control system 122 (or other avionics), and other loads 124 to that may be used to operate the aircraft 100, such as an intelligence surveillance reconnaissance (ISR) payload.

The electric motor 118 may be a brushed or brushless electric motor controlled via the motor controller 128, such as an electronic speed controller (ESC) unit. A motor controller 128 refers to an electronic circuit configured to convert the current draw (I_{Draw}) from the battery system 200 to an adjustable drive current (I_{Drive}) to vary a speed of the electric motor 118 (motor speed), its direction, and, when desired, to act as a dynamic brake. The motor controller 128 may be coupled (or otherwise integrated) with the aircraft 100 (*e.g.*, along with the electric motor 118 as part of a nacelle pod). One or more electrical safety devices 132 (*e.g.*, fuses, e-Fuses, circuit breakers, resettable fuses, such as a polymeric positive temperature coefficient (PPTC) devices, etc.) may be provided in-line between the battery bus 210 and the motor controller 128 to provide over-current protection.

The battery system 200 may be recharged over the battery bus 210 using a charge current (I_{Charge}) from a power supply 126, which may be onboard the aircraft 100, external to the aircraft 100, or a combination thereof. For example, the power supply 126 may be an onboard engine-driven generator (*e.g.*, a hybrid-electric arrangement) or an onboard renewable energy source (*e.g.*, solar panels). Additionally or alternatively, the power supply 126 may be a charging station on the ground that uses line current to create the charge current (I_{Charge}) to recharge the battery system 200.

The battery system 200 generally comprises a plurality of battery packs 202 that are arranged electrically in parallel to one another. As illustrated, the battery packs 202 are connected between the ground and battery bus 210. While four battery packs 202 are illustrated in Figure 2a, additional or fewer battery packs 202 may be employed to achieve a target battery capacity (*e.g.*, to provide adequate power for a given aircraft, flight plan, and/or electric loads). By way of illustration, battery system 200 of the aircraft 100 may include about 2 to 12 battery packs 202.

Each of the plurality of battery packs 202 comprises a battery management system 208 and a plurality of battery modules 206 that are arranged electrically in series to define two or more battery strings 204 (*e.g.*, separate battery strings 204). The battery strings 204 may be configured (*e.g*., sized) such that each battery string 204 in a given battery pack 202 provides the same nominal voltage. While each battery pack 202 is illustrated with four battery strings 204 that are arranged electrically in parallel, additional or fewer battery strings 204 may be employed to achieve a target capacity for the battery pack 202. For example, the battery pack 202 may comprise 2 to 10 battery strings 204, more preferably 2 to 8 battery strings 204, and most preferably at least 3 battery strings 204. Further, while each battery string 204 is illustrated with five battery modules 206 that are arranged electrically in series, additional or fewer battery modules 206 may be employed to achieve a target string voltage (V_{String}) for the battery string 204. For example, the battery string 204 may comprise 2 to 20 battery modules 206, more preferably 4 to 15 battery modules 206, and most preferably at least 4 battery modules 206. The number of battery strings 204 and battery modules 206 employed in the battery system 200 may be selected as a function of target capacity, target voltage, and target weight (*e.g*., max weight) of the overall battery system 200.

The components of the battery system 200, such as the battery pack 202, battery strings 204, and/or battery modules 206, may be centrally located in the aircraft 100 (*e.g.*, in the airframe 102) or distributed throughout the aircraft 100 (*e.g.*, positioned on the airframe 102, wing set 104, empennage 106, etc.) to balance the weight of the battery system 200 and/or mitigate performance issues should a portion of the aircraft 100 become physically damaged or detached.

While a fixed battery string architecture (*e.g.*, hardwired string of batteries) can minimize the footprint (*e.g*., size, weight, power requirements, etc.) of a battery system, the output voltage exhibits an increasing variance during a cycle from fully charged to fully discharged as the battery cell count increases and/or the battery cells cycle from fully charged to fully discharged. Therefore, additional hardware is typically implemented to regulate the output voltage of the battery system at a penalty of reduced overall efficiency lost to the output conversion process. A battery system 200 that can intelligently reconfigure the number of battery modules 206 in a battery string 204, however, obviates the need for an additional voltage regulator stage and improving the overall efficiency.

The battery system 200 allows for dynamic reconfiguration at various levels of control granularity (*e.g*., per battery module 206, per battery string 204, etc.). For example, the battery system 200 can regulate the output voltage or capacity by dynamically selecting a subset of all available battery modules 206 and dynamically switching battery modules 206 in to (online) or out of (offline/bypass) the battery string 204. Therefore, the battery system 200 tolerates single-fault for flight safety such that the battery system 200 will operate normally in the event of less than optimal performance of a battery module 206 (or portion thereof).

The battery system 200 also provides the ability to address defective battery modules 206 within the battery system 200. Traditional battery systems are vulnerable to even a single defective battery module, rendering the system unusable and forfeiting the remaining energy still in the viable (*i.e.*, good/usable) batteries. Rather, the battery system 200 described herein can bypass a defective battery module 206 in the battery string 204 in accordance with a predetermined switching routine, thereby resulting in a battery system 200 that is immune to less than optimal performance of a battery cell. Therefore, if needed, a defective component of the battery system 200 can be switched offline and substituted to provide further fault protection. For example, the components of the battery system 200 can be provided as line replaceable units (LRU), where a defective battery module 206 can be switched offline (*e.g*., switched out/bypassed) to provide further fault protection.

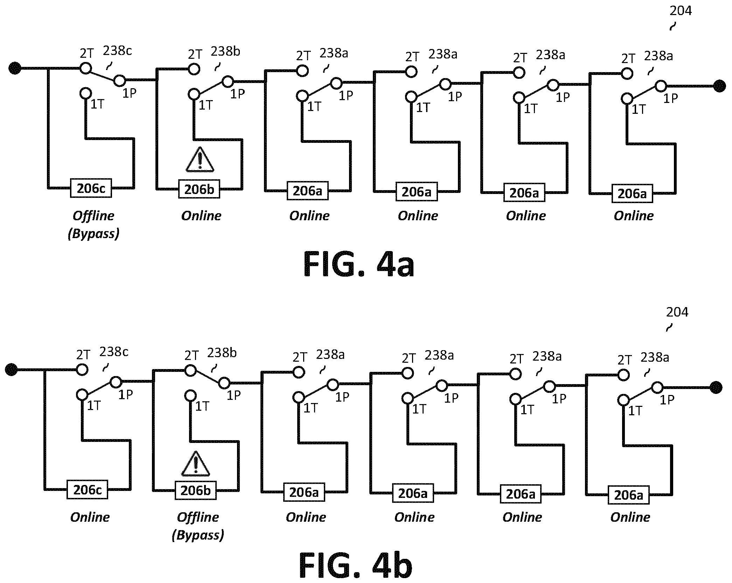

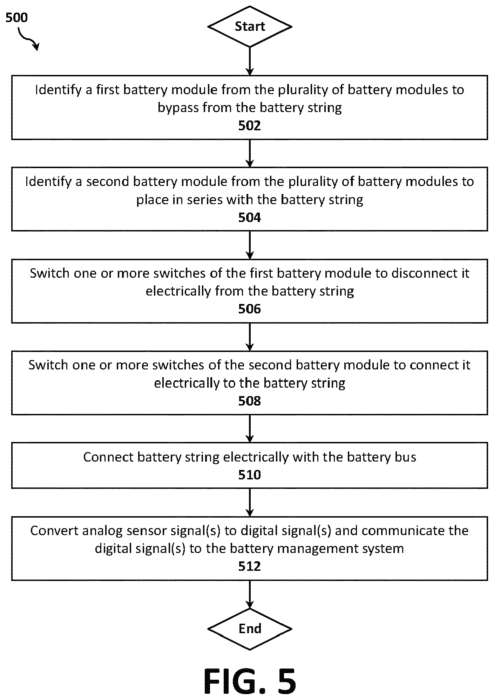

The number of battery packs 202, battery strings 204, and/or battery modules 206 in the battery system 200 may be selected to achieve a desired, target voltage and/or target capacity. It is advantageous, however, to provide reserve (*e.g*., extra or redundant) battery packs 202, battery strings 204, and/or battery modules 206. For example, the battery system 200 may include a reserve battery pack 202, battery string 204, and/or battery module 206 that can be switched in to replace a defective battery pack 202, battery string 204, and/or battery module 206. For example, as will be discussed in connection with Figures 4a, 4b, and 5, the battery system 200 may detect (during operation) that a battery pack 202, a battery string 204, and/or a battery module 206 is no longer maintaining a charge, accepting a charge, or is otherwise exhibiting an anomaly (*e.g*., a defect, such a thermal runaway condition) upon which, a reserve battery pack 202, battery string 204, and/or battery module 206 could be switched in to replace one or more battery packs 202 exhibiting less than optimal performance, battery strings 204 exhibiting less than optimal performance, and/or battery modules 206 exhibiting less than optimal performance (or be used at the end of flight plan as a power reserve). With reference to Figure 2a, battery system 200 is illustrated as including four battery packs. In an example, one of these four battery packs 202 may serve as a reserve battery pack. Further, each battery pack 202 is illustrated as including four battery strings. In an example, one of these four battery strings 204 may serve as a reserve battery string. Still further, Figures 4a, 4b illustrate replacing a defective battery module 206b with a reserve battery module 206c.

The battery modules 206 within a battery string 204 may be electrically connected to one another via one or more interconnectors to facilitate the passing of power and/or data signals from one battery module 206 to another battery module 206 (*e.g.*, an adjacent battery module 206). The interconnectors may employ, for example, a first connector (*e.g.*, a female connector) and a second connector (*e.g.*, a male connector) configured to mate with one another. For example, when the battery modules 206 are arranged to define a battery string 204, power and/or data signals may be conveyed, or otherwise communicated, from one end (*e.g*., proximal end) of a battery string 204 to an opposite end (*e.g.*, distal end) of the battery string 204 via the interconnectors; each of which can provide pass through functionality in the event of an isolated battery module 206 exhibiting less than optimal performance.

In one example, the battery modules 206 can integrate the power rails (*e.g.*, power, neutral, ground etc.) and data communication line(s) 262 with in-line connections such that battery modules 206 can be attached to one another to form continuous power and data pathways for feeding the load and interacting with the processor 212. In certain aspects, a battery string 204 within the battery system 200 can be expanded and contracted as needed via the interconnectors (*e.g*., additional battery modules 206 may be connected or disconnected). In other words, power and/or data signals are carried across the battery string 204 through the interconnectors, thereby only requiring an electrical connection at one end of the battery string 204 to allow quick electrical and mechanical integration.

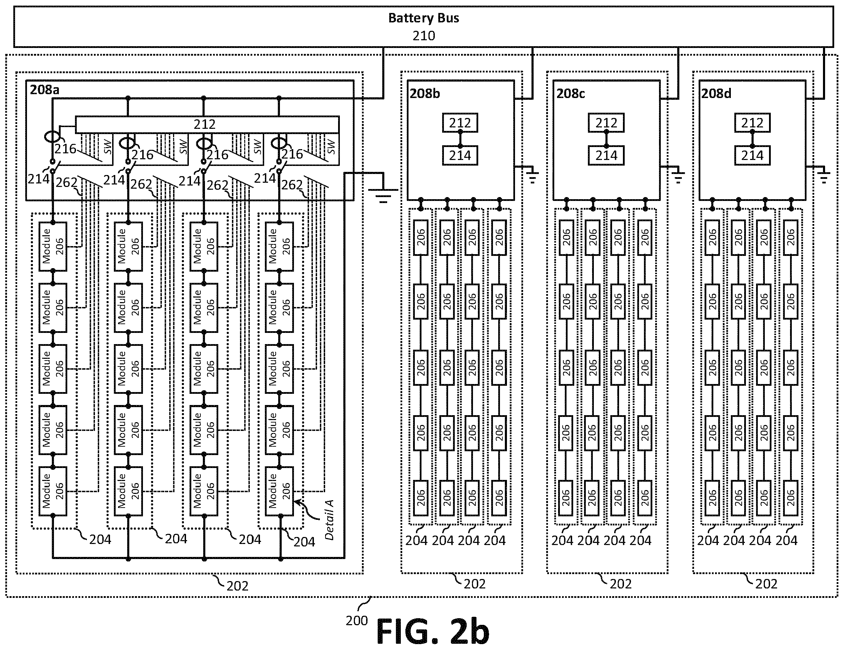

The details of each battery pack 202 will become more apparent with reference to Figure 2b, which illustrates a block diagram of the battery system 200 of the vehicle management system. The architecture of the battery system 200 provides a battery management system 208 that monitors and controls the reconfigurable functions of the battery modules 206 via the one or more processors 212. While a single processor 212 is illustrated as coupled to each of the plurality of current sensors 216 and as controlling each of the plurality of string switches 214 via switch signals, the battery management system 208 may employed a plurality of processors 212. For example, while not illustrated, a dedicated processor 212 may be provided for each current sensor 216 and/or string switches 214. The example battery system 200 is again illustrated with four battery packs 202, each having its own battery management system 208. Specifically, the battery management systems 208 are illustrated as first, second, third, and fourth battery management systems 208a, 208b, 208c, 208d, which, for purposes of this example, can be assumed to be substantially identical to one another. Therefore, for ease of illustration, the details of only the first battery management system 208a are illustrated.

As illustrated, the first battery management system 208a comprises a processor 212, a plurality of string switches 214, and a plurality of current sensors 216. For example, each battery pack 202 is illustrated with four battery strings 204 that are arranged electrically in parallel and coupled to the battery bus 210 via a four different string switches 214. The plurality of string switches 214 are configured to electrically connect and disconnect each battery string 204 from the battery bus 210 to enable to battery string 204 (or portion thereof) can be charged or discharged.

The processor 212 is operably coupled to each of the plurality of string switches 214 and the plurality of current sensors 216. For example, the processor 212 may receive from the current sensors 216 the measured string current (I_{String}) for each of the battery strings 204. For example, each of the plurality of current sensors 216 is configured to measure a string current (I_{String}) passing through its respective battery string 204. The processor 212 is also operably coupled to each battery module 206 of the battery strings 204 and configured to received sensor readings (*e.g*., in digital format) from each battery module 206 via one or more data communication lines 262. The data communication lines 262 may be shielded so as to mitigate electromagnetic interference (EMI) for, *inter alia,* the battery strings 204. While only a current sensor 216 is illustrate in Figure 2b, the data communication lines 262 may be coupled to one or more other sensors, instruments, or other hardware that monitor or control, for example, the health and/or operating parameters (*e.g*., temperature, humidity, voltage, etc.) of each battery module 206 or cell pack 224 within a battery string 204.

The first battery management system 208a tracks impedance/resistance and capacity of the battery string 204 and each battery module 206 over time. Accordingly, the battery system 200 can implement preventive measures against cell degradation (or further cell degradation) by balancing the loading across the most viable battery modules 206. This implementation ensures that, absent an unexpected performance or defect, battery cells are constantly balanced and degrade at equal rate. The first battery management system 208a can therefore maximizes the capacity of the battery packs 202 and/or battery strings 204 over its expected/usable lifetime without dissipating excessive energy in battery cell balancing schemes.

The battery system 200 can use a combination of hardware switching and protection elements, and a software-based module-selection process based on a number criteria. The hardware instrumentation measures one or more parameters, including battery voltage, battery temperature, battery-string voltage, battery-pack voltage, battery-pack current, battery-pack-assembly voltage, battery-pack-assembly current, battery pressure (*e.g*., cell-stack pressure), and/or other parameters useful to inform the module-selection process within the battery system 200.

The first battery management system 208a is configured to selectively switch, via the processor 212, the string switches 214 (and/or one or more battery switches 238 discuss below) between a first position and a second position via a switch command from the processor 212 to switch between a closed, conducting position and an open, non-conducting position (or bypass, in the case of battery switch 238).

The one or more processors 212 monitor each of the one or more battery modules 206 of a battery string 204 and, in certain aspects, the power supply 126 and one or more electric loads (*e.g.*, electric motors 118, motor controllers 128, control actuators 130, flight control system 122, and other loads 124, etc.). For instance, in response to an input parameter (*e.g*., an instruction from the flight control system 122 of the aircraft 100), the battery management system 208, via processor 212, may adjust the electric load and/or adjust (or reallocate) power from the one or more battery strings 204 to meet the needs of electric load. To that end, the battery management system 208 and processor 212 may incorporate, or be operatively coupled with, each battery module 206. The battery management system 208 may communicate through either a simplex or redundant communications bus to each of the battery modules 206 in the battery system 200. The battery management system 208 may employ one or more control area network (CAN) buses for monitoring, communication, and/or control, while an external bus may be used to transfer power between the battery system 200 (or components thereof) and the electric load or power supply 126.

As batteries age (over multiple charge/discharge cycles), the impedance/resistance, and capacity degrade and battery cell characteristics diverge. Sensor information, which may be in the form of digital data signals from one or more sensors in the battery system 200 (*e.g.*, voltage sensor, current sensors, strain sensors, thermistor 222, etc.), is therefore evaluated by the processor 212 and associated software of the battery management system 208 (or, if desired, a higher level control system, such as flight control system 122) to determine, *inter alia,* the state of charge (SoC), state of health (SoH), and equivalent resistance of each battery module 206 in the battery pack 202 or battery string 204, which may be updated in real time (or near real time) or on a periodic basis (*e.g*., every 1 to 5 minutes). For example, the battery management system 208 may determine the SoC of the battery module 206 in one or more ways. When the battery module 206 is out of the battery string 204 (*i.e.*, bypassed), the SoC of the battery module 206 can be determined by measuring the open circuit voltage (OCV) of the battery module 206. When the battery cell 220 is in the battery string 204, the SoC of the battery module 206 can be estimated by measuring the in-and-out-flowing current. One technique for estimating the SoC of a battery using the in-and-out-flowing current is known as the coulomb counting method (also known as ampere hour counting and current integration). The coulomb counting method employs battery current readings mathematically integrated over the usage period to calculate SoC values. The coulomb counting method then calculates the remaining capacity simply by accumulating the charge transferred in or out of the battery.

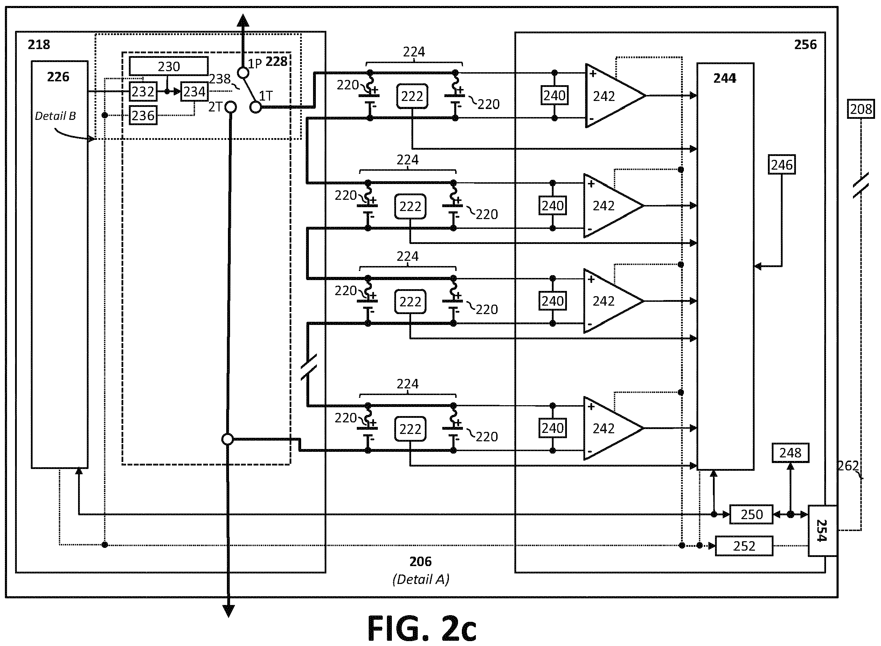

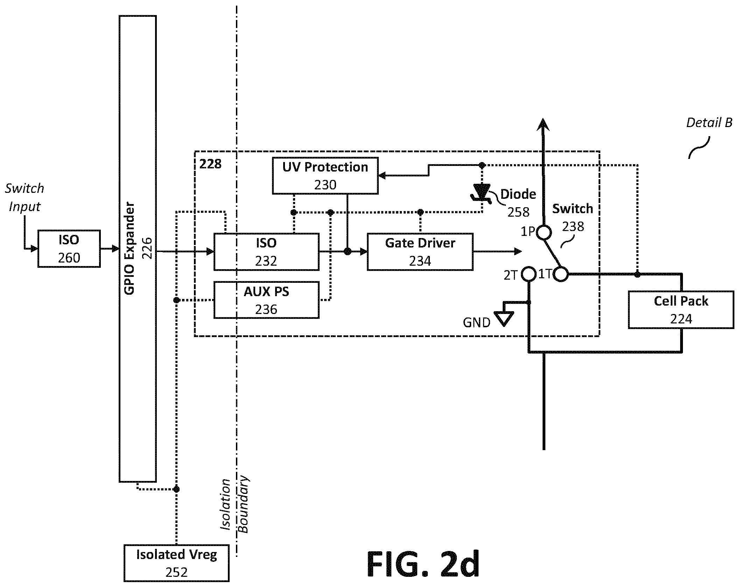

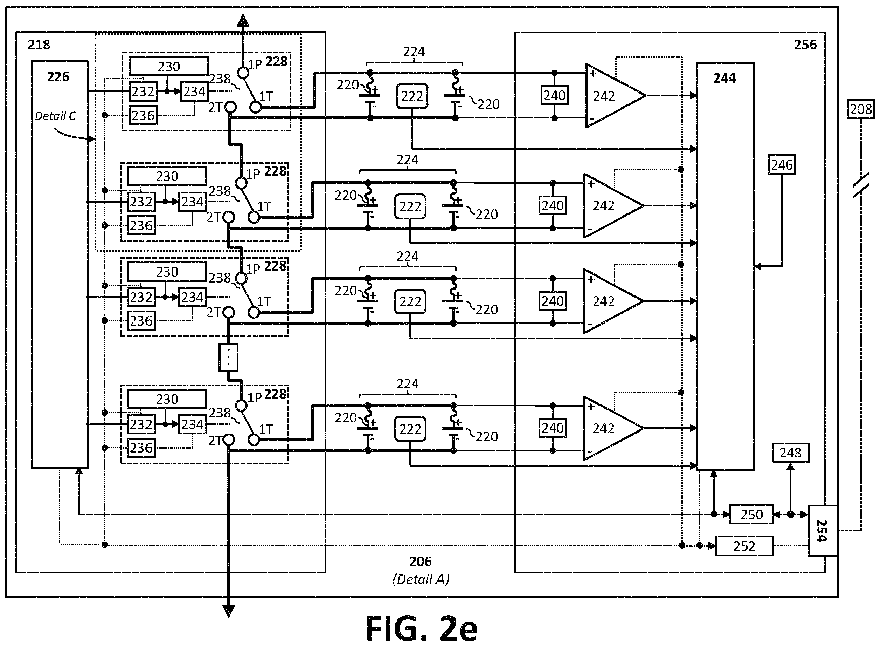

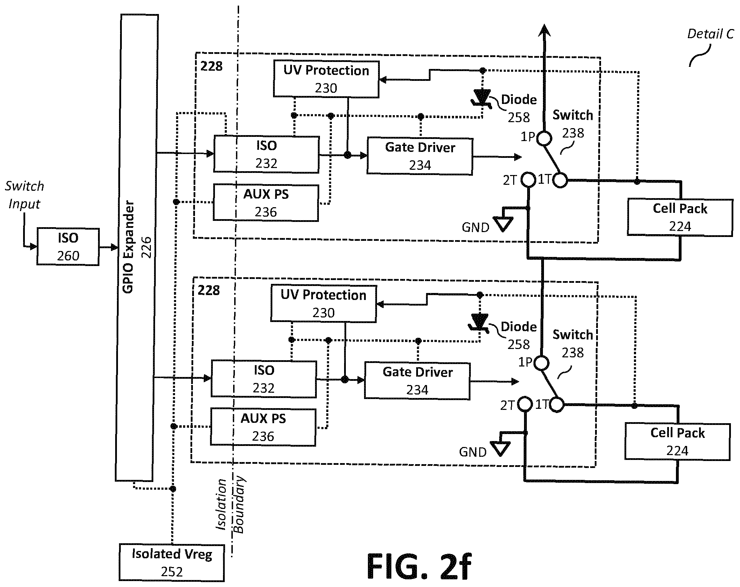

Details of the battery module 206 will now be described in connection with the battery modules 206 of Figures 2c through 2f. Figures 2c illustrates a block diagram of a battery module 206 of the battery system 200 in accordance with a first aspect, where Figure 2d illustrates a block diagram of a supervisory circuit (Detail B) of the battery module of Figures 2c. Similarly, Figures 2e illustrates a block diagram of a battery module 206 of the battery system 200 in accordance with a second aspect, where Figure 2f illustrates a block diagram of a supervisory circuit (Detail C) of the battery module of Figures 2e.

The battery modules 206 of Figures 2c through 2f are substantially the same, except the battery module 206 of Figures 2e and 2f employs multiple battery switches 238 to provide a more granular control of switching the battery modules 206, but at the expense of increases in cost, weight, and relative complexity. For example, a separate battery switch 238 (illustrated as a single pole, double throw (SPDT) switch) is provided for each of the cell packs 224 to allow for each cell pack 224 to be electrically switched in or out of the battery module 206.

As illustrated, the battery module 206 generally comprises a circuit board 218, one or more cell packs 224 composed of a plurality of battery cells 220, and an instrumentation board 256. While the circuit board 218 and instrumentation board 256 are illustrated as two separate boards, some or all functionality of the circuit board 218 may be provided by the instrumentation board 256. In one example, the functionality described in connection with the circuit board 218 and the instrumentation board 256 may be provided by a single circuit board.

The battery module 206 provides one or more supervisory circuits 228 operatively coupled to the processor 212 and one or more battery switches 238 to selectively enable (activated) or bypass one or more of the plurality of battery cells 220 (*e.g.*, as cell packs 224) within the battery module 206. The one or more supervisory circuits 228 and one or more battery switches 238 may be provided via the circuit board 218, for example. Each of the battery modules 206 may be selectively switched online (connected) to or switched offline (disconnected) from the battery string 204 via one or more battery switches 238 of supervisory circuit(s) 228. The instrumentation board 256 is communicatively coupled with battery management system 208 over one or more data communication lines 262 via a data connector 254.

As illustrated in Figure 2c, the battery module 206 may employ battery cells 220 having a fixed architecture (*e.g*., hardwired battery cells 220) to reduce the cost and complexity associated with providing a switch for each cell pack 224. In this example, only a single battery switch 238 needs to be controlled to connect and disconnect (bypass) the entire battery module 206 from the battery string 204. Conversely, if the ability to switch individual cell packs 224 is desired, a battery switch 238 can be provided for each cell pack 224 as best illustrated in Figures 2e, in which case each of the battery switches 238 in the battery module 206 needs to be controlled to connect and disconnect (bypass) that battery module 206 from the battery string 204.

Within examples, the battery management system 208 is configured to selectively switch, for each of the plurality of battery modules 206, the one or more battery switches 238 between a first position (*e.g*., first throw (1T) position) that electrically places the one or more cell packs 224 in series with the battery string 204 and a second position (*e.g*., second throw (2T) position) that electrically bypasses the one or more cell packs 224 from the battery string 204. The battery switch 238 may provide SPDT switch functionality. Therefore, as illustrated, the battery switch 238 may be a SPDT switch where the pole (IP) can be connected to either the first throw (1T) to insert/activate the battery module 206 by including it in series with the battery string 204 or the second throw (2T) to bypass the battery module 206 from the battery string 204. To disconnect a battery module 206 from the battery string 204 (*e.g.*, in the event of less than optimal performance or to achieve a desired power/capacity), the one or more battery switches 238 may switch to the second throw (2T) position. For example, in the case of a battery module with a single battery switch 238, the battery switch 238 of the battery module 206 may switch to the second throw (2T) position. Similarly, in the case of a battery module with multiple battery switches 238, each battery switch 238 of the battery module 206 may switch to the second throw (2T) position. The battery management system 208 may control the one or more battery switches 238 as a function of sensor information received from one or more sensors via the instrumentation board 256. The sensor information may related to one or more monitored parameters of the battery module 206, battery pack 202, and/or battery string 204, such as temperature measurements, voltage measurements, current measurements, strain measurements, etc. The battery management system 208 is further configured to electrically couple the battery string 204 with a battery bus 210 via a string switch 214. The battery management system 208 may receive the sensor information via the one or more data communication lines 262.

The one or more battery switches 238 (and/or the string switches 214) may be solid-state switches, such as a silicon carbide metal-oxide-semiconductor field-effect transistor (MOSFET), an insulated-gate bipolar transistor (IGBT), etc. Silicon carbide MOSFETS, for example, offer significantly reduced resistance compared to silicon MOSFETS, thereby resulting in reduced weight, reduced cooling complexity, higher efficiency, and higher overall battery energy density. While solid-state switches offer certain advantages in terms of size, cost, and weight, other switches are possible, such as other forms of MOSFETs, mechanical relays, reed switches, or IGBT switches (or another form of solid-state switch), etc., The battery switches 238 may be controlled in a break-before-make (BBM or non-shorting) arrangement, which interrupts one circuit before closing the other, thereby mitigating any risk of shorting the battery module 206 being switched.

In operation, the supervisory circuit 228 converts battery module-select commands from the battery management system 208 to selectively insert/bypass individual battery modules 206 of the battery string 204. The plurality of battery switches 238 may be electrically coupled to the plurality of battery cells 220 via a printed circuit board assembly (PCBA).The battery cells 220 may be provided as single-cell batteries, multi-cell batteries, or a combination thereof. Depending on the desired nominal voltage of a multi-cell battery, for example, the battery cells 220 may be electrically arranged and connected (*e.g.*, in a hardwired, fixed architecture) to define a cell pack 224 to achieve a desired nominal voltage and/or power for the battery cell 220, whether in a parallel configuration (as illustrated), in a series configuration, or a combination thereof. The battery cell 220 may employ one of multiple cell designs, including prismatic, cylindrical, and/or pouch.

The battery management system 208 monitors and controls operation of the battery string 204, including each of the battery modules 206 and components thereof. The battery management system 208 may generate a plurality of system outputs (*e.g*., instructions, which may be analog or digital) to control operation of the battery pack 202 and/or battery modules 206. For example, the battery management system 208 can be configured to generate module-select commands to insert/bypass individual battery modules 206 within a battery string 204. The system outputs may be based on sensor information (*e.g*., digital data signals) received from two or more sensors via two or more system inputs. Example sensor information received at the system inputs include, *inter alia,* voltage measurements (*e.g.*, per battery module 206), individual temperature measurements (*e.g*., per battery cell 220 or cell pack 224, which may be measured via temperature sensor, such as thermistor 222), current measurements (*e.g*., through battery string 204, via current sensor 216), and output voltage measurements of the battery module 206. Example system outputs may include, *inter alia,* battery switch control instructions (*e.g.*, a signal/command), the power to the connected load (*e.g.*, a per battery module 206 basis), and total voltage (*e.g.*, on a per battery module 206 basis).

The battery management system 208 may switch in or out a battery string 204 (*e.g.*, via string switches 214) or a battery module 206 (*e.g.*, via one or more battery switches 238) to achieve a desired voltage, a desired capacity, and/or to electrically remove a defective battery string 204 or a defective battery module 206 from the battery system 200. In other words, the battery management system 208 selectively inserts/bypasses battery module 206 to achieve a desired voltage, to substitute a defective battery module 206 with an operable battery module 206 (a reserve battery pack), and/or to supplement power with the reserve battery pack 202.

In some aspects, the battery management system 208 may be configured to switch simultaneously the one or more battery switches 238 and/or the string switches 214. For example, the battery management system 208 may be configured to switch simultaneously (1) the one or more battery switches 238 of the first battery module 206 to the second throw (2T) position and (2) the one or more battery switches 238 of the second battery module 206 to the first throw (1T) position. In other aspects, the battery management system 208 may be configured to switch the various switches in a break-before-make (BBM or non-shorting) arrangement. For example, the one or more battery switches 238 and/or the string switches 214 can be implemented in a BBM arrangement that interrupts one circuit before closing the other, thereby mitigating any risk of shorting the cell pack 224 or battery string 204 being switched. The one or more battery switches 238 and/or the string switches 214 may be provided using back-to-back FETs (*e.g*., N-MOSFETS) in common source configuration, TRIACs (a three terminal semiconductor device), bipolar junction transistors (BJT), etc.

The battery management system 208 provides over-voltage and under-voltage protection, as well as over-current protection and short-circuit protection. The circuit board 218 may further comprise a general-purpose input/output (GPIO) expander 226 and one or more supervisory circuit 228 (*e.g.*, one for each battery switch 238). The GPIO expander 226 operates to communicatively couple the processor 212 to each supervisory circuit 228 of the circuit board 218. Input/output expander ICs (*e.g.*, GPIO expander 226) allow for multiple control signals that expand the available I/O to the processor 212. When multiple control signals are not needed, the GPIO expander 226 may be omitted.

Each supervisory circuit 228 includes a cell under-voltage (UV) protection circuit 230, an isolator 232, a gate driver 234, one or more battery switches 238 to electrically connect the one or more cell packs 224 of a battery module 206 to the battery string 204, and an auxiliary power supply 236. The isolator 232 serves to isolate the cell switch signal between the gate driver 234 and the one or more battery switches 238. In operation, the circuit board 218 controls, based on instruction from the processor 212, each of the one or more battery switches 238 to connect or disconnect the one or more cell packs 224, thereby connecting or disconnecting the battery module 206.While the battery module 206 is illustrated with four cell packs 224 that are arranged electrically in series, additional or fewer cell packs 224 may be employed to achieve a target voltage for the battery module 206. For example, the battery module 206 may comprise 1 to 20 cell packs 224, more preferably 2 to 16 cell packs 224, and most preferably at least 4 cell packs 224.

The instrumentation board 256 serves to provide a number of functions, including data isolation, isolated power regulation, voltage, and/or temperature monitoring of the cell pack 224, and overvoltage (OV) hardware mitigation. To that end, the instrumentation board 256 includes an OV protection circuit 240, a differential op amp 242, a multiplexer (MUX) analog-to-digital converter (ADC) 244, a reference voltage (V_{ref}) 246, a local memory 248, a serial peripheral interface (SPI) data & chip select (CS) isolation 250, an isolated regulated voltage (V_{Reg}) 252, and a data connector 254 to relay signals back (*e.g.*, in digital format) to the battery management system 208. Therefore, the supervisory circuit 228 is configured to communicate the digital signal to the battery management system 208. Each battery module 206 may provide analog-to-digital conversion via ADC 244 of all battery cell level measurements to the instrumentation board 256, thereby obviating the need to feed analog signals to a separate data interface board and enabling use of a simple bus instead.

Various parameters of the battery cells 220 may be measured and communicated to the battery management system 208 (via the instrumentation board 256) for processing. Example parameters include, for example, voltage, current, temperature, and compression of the battery module 206. In certain aspects, the battery cell 220 may be configured as a 2p cell assembly where a thermistor 222 and/or a strain sensor may be positioned between the two p cells. Alternatively, a single strain sensor could be used to monitor the compression of the full battery module 206. The one or more cell packs 224 includes two or more battery cells 220 arranged electrically in parallel. While each of the one or more cell packs 224 is illustrated with two battery cells 220 arranged electrically in parallel, additional battery cells 220 may arranged electrically in parallel depending on power capacity requirements. Each of the one or more cell packs 224 may further comprises a thermistor 222 to measure a temperature (*e.g*., dynamically; in real-time or near real-time) of the cell pack 224. A strain measurement may optionally be included from each battery module 206 to monitor the compression of the battery cells 220. For example, one or more thermistors 222 and/or strain sensors can be physically positioned adjacent or between the battery cells 220 in the battery module 206 to monitor, respectively, the temperature and strain of each of the cell packs 224. The parameters may be monitored/measured on a per battery module 206 basis or per cell pack 224 basis *e.g*., temperature). For example, one or more battery cells 220 of the battery module 206 may be associated with a thermistor 222 and/or a strain sensor to allow the instrumentation board 256 to monitor each of the battery modules 206 individually.

With reference to Figures 2d and 2f, which illustrate respectively first and second block diagrams of a supervisory circuit 228 of the battery modules 206. As illustrated, an input switch signal (*e.g*., from the processor 212 is communicated to the GPIO expander 226 via an isolator 260, where the input switch signal is then communicated from the GPIO expander 226 to each of the supervisory circuits 228 (*e.g.*, via isolator 232). The isolated regulated voltage (V_{Reg}) 252 supplies power to the GPIO expander 226 and the supervisory circuits 228 (*e.g.*, via isolator 232 and auxiliary power supply 236. One or more diodes 258 may be provided to prevent the auxiliary power supply 236 from feeding current into the one or more cell packs 224 when cell voltage is low.

The isolated regulated voltage (V_{Reg}) 252 supplies power needed to operate the various components (*e.g*., the various integrated circuits (IC)) of the low and high voltages circuits. The isolated regulated voltage (V_{Reg}) 252 may be, for example, an isolated flyback µModule DC/DC converter with low-dropout (LDO) post regulator with an isolation rating of, for example, 725 VDC. The isolated regulated voltage (V_{Reg}) 252 may be operable over an input voltage range of 3.1V to 32V with an output voltage range of 2.5V to 13V. The isolated regulated voltage (V_{Reg}) 252 may also include a linear post regulator whose output voltage is adjustable from 1.2V to 12V as set by a single resistor.

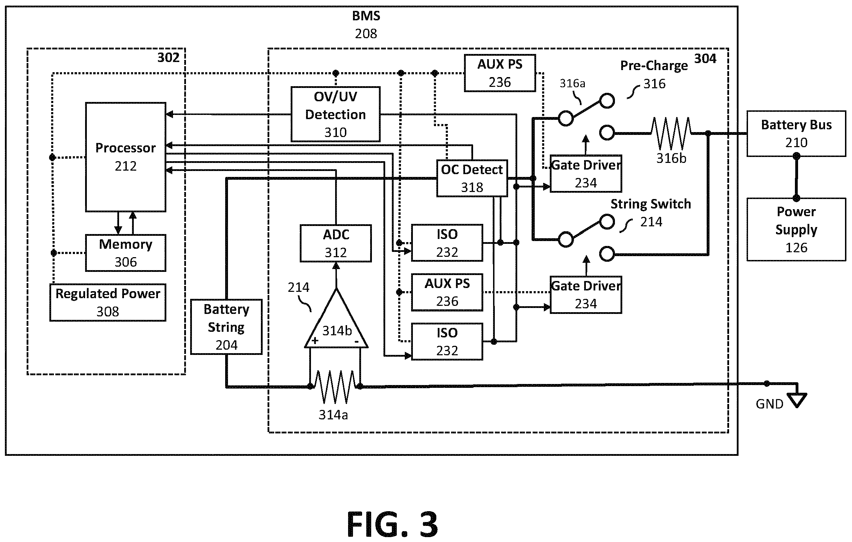

Figure 3 illustrates a block diagram of a battery management system 208 of the battery system 200. The battery management system 208 generally comprises a processor board 302 and a top-switch board 304. The processor board 302 comprises the processor 212, which is operably coupled to a memory device 306, and a regulated power supply 308. The top-switch board 304 generally comprises an overvoltage (OV)/under voltage (UV) detection circuit 310, a ADC 312 to convert analog sensor signals to digital sensor signals, a current sensor 216, a pre-charge circuit 316, an overcurrent (OC) detector 318, one or more isolators 232, one or more gate drivers 234 to drive the various switches (*e.g*., pre-charge switch 316a and string switch 214, and auxiliary power supplies 236.

The battery management system 208 may be configured to electrically couple the battery string 204 with the battery bus 210 via a pre-charge circuit 316 configured to perform a pre-charge cycle. The pre-charge circuit 316 comprises a pre-charge switch 316a that is coupled electrically in series with a pre-charge resistor 316b to limit current flow through the pre-charge switch 316a. The pre-charge switch 316a may be a bi-directional, maximum string voltage blocking, output contactor. Therefore, rather than directly connecting the battery string 204 to the battery bus 210 via the string switch 214, the pre-charge circuit 316 selectively controls the pre-charge switch 316a via a gate driver 234 to connect the battery string 204 to the battery bus 210 via the pre-charge resistor 316b. During the pre-charge cycle, the pre-charge resistor 316b mitigates an in-rush of current from the battery bus 210 when the battery (*e.g*., battery string 204) is connected to the battery bus 210 initially. The pre-charge cycle may terminate upon achieving a predetermined condition, at which point the string switch 214 closes and the pre-charge switch 316a opens. The predetermined condition may be, for example, when a pre-determined time period passes or when the voltage of the battery bus 210 meets a pre-determined percentage of the voltage of the battery being switched (illustrated as battery string 204). As illustrated, the supervisory circuit 228 comprises a current sensor 216 and an analog-to-digital converter (ADC) 312, wherein the current sensor 216 is configured to output an analog signal representing current flow through the one or more cell packs 224 of a battery string 204 and the ADC 312 is configured to convert the analog signal to a digital signal. Specifically, the current sensor 216 measures current through resistor 314a (R_{Sense}) via operational amplifier 314b. In certain aspects, a voltage sensor may be provided to measure voltage across resistor 314a (R_{Sense}).

Figures 4a and 4b illustrates a block diagram of a battery string 204 with a reserve battery module 206c before and after switching. As noted above, rather than abort the flight plan to perform maintenance, a defective battery pack 202, battery string 204, and/or battery module 206 may be electrically disconnected from the battery system 200 and replaced by the reserve battery pack 202, battery string 204, and/or battery module 206 via one or more switches (*e.g*., string switch 214, battery switch 238). When using a reserve battery pack 202 or a reserve battery string 204, the battery system 200 must be sized to provide a large excess capacity in the event a battery cell 220 or a battery module 206 does not operate as intended because the entire battery pack or string would then need to be removed from the system.

Employing a reserve battery module 206c in lieu of a reserve battery pack 202 or reserve battery string 204 offers certain advantages, such as reducing weight, size, and cost of the overall battery system 200 by obviating the need to provide an entire reserve battery pack 202 or reserve battery string 204. Therefore, employing a reserve battery module 206c allows the excess capacity associated with reserve battery pack 202 and reserve battery string 204 to be reduced along with reducing the power handling required from each battery string 204, creating a lower weight, higher efficiency, higher energy density battery system. Providing each battery string 204 with a reserve battery module 206c also allows for multiple replacements across the battery system 200 (*e.g.*, at least one battery module 206 per battery string 204 can exhibit less than optimal performance and be replaced) without having to replace the entire battery pack 202 (a majority of which may still be usable).

In the illustrated example, six battery modules 206a, 206b, 206c are employed, but only five battery modules 206 are needed to maintain normal operation, thereby providing a reserve battery module 206c that can be switched in to the battery string 204 as-needed to replace, for example a defective battery module 206b. The six battery modules 206a, 206b, 206c may be structurally identical and each includes a battery switch 238a, 238b, 238c to connect and disconnect it from the battery string 204.

In operation, the battery management system 208 may be configured to identify a first battery module 206 from the plurality of battery modules 206 that may be defective. In one example, the defective battery module 206b may be identified as defective upon, for example, detecting a thermal runaway condition (*e.g*., via readings from one or more thermistors 222). Once the defective battery module 206b has been flagged or otherwise identified as defective, the battery management system 208 may bypass it from the battery string 204. For example, the battery switch 238b associated with the defective battery module 206b may be switch from the first throw (1T) position (Figure 4a) to the second throw (2T) position (Figure 4b). The battery management system 208 may also identify a second battery module 206 from the plurality of battery modules 206 that is not placed in series with the battery string 204 (*e.g.*, a reserve battery module 206c) that can be placed in series with the battery string 204 in lieu of the defective battery module 206b. In this example, only one reserve battery module 206c is illustrated, but multiple reserve battery modules 206c may be available (*e.g*., two or more). Once the reserve battery module 206c has been identified, the battery management system 208 may add it to the battery string 204. For example, the battery switch 238c associated with the reserve battery module 206c may be switch from the second throw (2T) position (Figure 4a) to the first throw (1T) position (Figure 4b). In certain aspects (*e.g*., where multiple reserve battery modules 206c are provided) the battery management system 208 may select a reserve battery modules 206c to substantially maintain a target output voltage of the battery string 204. For example, a reserve battery module 206c may be selected that has the same measured voltage as the defective battery module 206b had (or should have had) to maintain the target output voltage of the battery string 204.

Figure 5 illustrates an example method 500 for controlling (e.g., managing) a battery system 200. As noted above, the battery system 200 comprise a plurality of battery modules 206 arranged in series to define a battery string 204, where each of the plurality of battery modules 206 comprising at least one supervisory circuit 228, one or more cell packs 224, and one or more switches 238 to electrically connect the one or more cell packs 224 to the battery string 204, and a battery management system 208 to selectively switch, for each of the plurality of battery modules, the one or more switches 238 between a first position (first throw (1T) position) that electrically places the one or more cell packs 224 in series with the battery string 204 and a second position (second throw (2T) position) that electrically bypasses the one or more cell packs 224 from the battery string 204. The plurality of battery modules 206 may comprise one or more extra battery modules (*e.g.*, a reserve battery module 206c) that can be switched in to the battery string 204 as-needed to replace, for example a defective battery module 206b or to provide supplemental power.

At step 502, the battery system 200 identifies, via battery management system 208 and/or processor 212, a first battery module 206 from the plurality of battery modules 206 to bypass from the battery string 204. The first battery module 206 may be selected based on its SoC, SoH, temperature, etc. The step of identifying the first battery module 206 may involve identifying a battery module 206 among the plurality of battery modules 206 as defective (*i.e.*, a defective battery module 206b). Therefore, the first battery module 206 may be a defective battery module 206b. For example, the first battery module 206 may be experiencing a thermal runaway condition (or other fault).

At step 504, the battery system 200 identifies, via battery management system 208 and/or processor 212, a second battery module 206 from the plurality of battery modules 206 to place in series with the battery string 204. The second battery module 206 may be selected based on its SoC, SoH, temperature, etc. For example, a battery module 206 that is in good condition may be selected as the second battery module. The step of identifying the second battery module 206 may involve identifying a battery module 206 among the plurality of battery modules 206 as being in good condition (*e.g.*, a good SoC, SoH, etc.). The second battery module 206 may be, for example, a reserve battery module 206c.

At step 506, the battery system 200 switches, via at least one supervisory circuit 228 of the first battery module 206, the one or more switches 238 of the first battery module 206 to the second position (*e.g*., second throw (2T) position) to disconnect it electrically from the battery string 204.

At step 508, the battery system 200 switches, via at least one supervisory circuit 228 of the second battery module 206, the one or more switches 238 of the second battery module (206) to the first position (*e.g*., second throw (2T) position) to connect it electrically to the battery string 204. In certain aspects, the one or more switches are switched in a break-before-make (BBM) arrangement.

At step 510, the battery system 200 connects, via battery management system 208 and/or processor 212, the battery string 204 with the battery bus 210. The battery string 204 may be connected to the battery bus 210 via either the string switch 214 or a pre-charge circuit 316. The pre-charge circuit 316 comprises a pre-charge switch 316a that is coupled electrically in series with a pre-charge resistor 316b to limit current flow through the pre-charge switch 316a. In certain aspects, the battery string 204 may be connected to the battery bus 210 via the pre-charge circuit 316 for a predetermined period of time and then connected (*e.g*., directly - not through the pre-charge resistor 316b) via the string switch 214.

At step 512, the battery system 200 converts, via an analog-to-digital converter (ADC) 312 of the supervisory circuit 228, analog sensor signals to a digital signal and communicates the digital signal to the battery management system 208. For example, the analog sensor signals may represent current flow through the one or more cell packs 224 as measured by current sensor 216. The converting and communication portions of step 512 can be provided as two separate steps if desired.

Further, the disclosure comprises embodiments according to the following clauses:
Clause 1. A method for controlling a battery system (200) comprising a plurality of battery modules (206) arranged in series to define a battery string (204), each of the plurality of battery modules (206) comprising a supervisory circuit (228), one or more cell packs (224), and one or more switches (238) to electrically connect the one or more cell packs (224) to the battery string (204), and a battery management system (208) to selectively switch, for each of the plurality of battery modules, the one or more switches (238) between a first position that electrically places the one or more cell packs (224) in series with the battery string (204) and a second position that electrically bypasses the one or more cell packs (224) from the battery string (204), the method comprising:
   identifying a first battery module (206) from the plurality of battery modules (206) to bypass from the battery string (204),
   identifying a second battery module (206) from the plurality of battery modules (206) to place in series with the battery string (204),
   switching the one or more switches (238) of the first battery module (206) to the second position, and
   switching the one or more switches (238) of the second battery module (206) to the first position.
Clause 2. The method of Clause 1, wherein each of the one or more cell packs (224) comprises two or more battery cells (220) arranged electrically in parallel.
Clause 3. The method of Clause 1 or Clause 2, further comprising the step of connecting the battery string (204) with a battery bus (210) via a pre-charge circuit (316), wherein the pre-charge circuit (316) comprises a pre-charge switch (316a) that is coupled electrically in series with a pre-charge resistor (316b) to limit current flow through the pre-charge switch (316a).
Clause 4. The method of any of Clauses 1 to 3, further comprising the step of identifying a defective battery module (206b) among the plurality of battery modules (206), wherein the first battery module (206) is the defective battery module (206b).
Clause 5. The method of Clause 4, wherein the second battery module (206) is a reserve battery module (206c).
Clause 6. The method of any of Clauses 1 to 5, further comprising the steps of converting, via an analog-to-digital converter (ADC) (312) of the supervisory circuit (228), an analog signal representing current flow through the one or more cell packs (224) to a digital signal, and communicating the digital signal to the battery management system (208).
Clause 7. The method of any of Clauses 1 to 6, further comprising the step of switching, via the battery management system (208), the one or more switches in a break-before-make (BBM) arrangement.
Clause 8. The method of any of Clauses 1 to 7, wherein each of the one or more switches (238) is a solid-state switch.
Clause 9. The method of Clause 8, wherein the solid-state switch is a silicon carbide metal-oxide-semiconductor field-effect transistor (MOSFET).
Clause 10. The method of Clause 1, wherein the string switch (214) is a solid-state switch.
Clause 11. The method of Clause 10, wherein the solid-state switch is a silicon carbide metal-oxide-semiconductor field-effect transistor (MOSFET).
Clause 12. A battery system (200) comprising:
   a plurality of battery modules (206) arranged in series to define a battery string (204), each of the plurality of battery modules (206) comprising a supervisory circuit (228), one or more cell packs (224), and one or more switches (238) to electrically connect the one or more cell packs (224) to the battery string (204); and
   a battery management system (208) to selectively switch, for each of the plurality of battery modules, the one or more switches (238) between a first position that electrically places the one or more cell packs (224) in series with the battery string (204) and a second position that electrically bypasses the one or more cell packs (224) from the battery string (204), wherein the battery management system (208) is configured to electrically couple the battery string (204) with a battery bus (210) via a string switch (214), and
   wherein the battery management system (208) is configured to:
   identify a first battery module (206) from the plurality of battery modules (206) to bypass from the battery string (204),
   identify a second battery module (206) from the plurality of battery modules (206) to place in series with the battery string (204),
   switch the one or more switches (238) of the first battery module (206) to the second position, and
   switch the one or more switches (238) of the second battery module (206) to the first position.
Clause 13. The battery system (200) of Clause 12, wherein each of the one or more cell packs (224) comprises two or more battery cells (220) arranged electrically in parallel.
Clause 14. The battery system (200) of Clause 12 or Clause 13, wherein the battery management system (208) selects the second battery module (206) to substantially maintain an output voltage of the battery string (204).
Clause 15. The battery system (200) of Clause 14, wherein the second battery module (206) is a reserve battery module (206c).
Clause 16. The battery system (200) of any of Clauses 12 to 15, wherein the battery management system (208) is configured to identify a defective battery module (206b) among the plurality of battery modules (206).
Clause 17. The battery system (200) of Clause 16, wherein the first battery module (206) is the defective battery module (206b).
Clause 18. The battery system (200) of any of Clauses 12 to 17, wherein each of the one or more switches (238) is a solid-state switch.
Clause 19. The battery system (200) of any of Clauses 12 to 18, wherein the string switch (214) is a solid-state switch.
Clause 20. The battery system (200) of any of Clauses 12 to 19, wherein the battery management system (208) is configured to switch simultaneously (1) the one or more switches (238) of the first battery module (206) to the second position and (2) the one or more switches (238) of the second battery module (206) to the first position.
Clause 21. The battery system (200) of any of Clauses 12 to 20, wherein the supervisory circuit (228) comprises a current sensor (314) and an analog-to-digital converter (ADC) (312), wherein the current sensor (314) is configured to output an analog signal representing current flow through the one or more cell packs (224) and the ADC (312) is configured to convert the analog signal to a digital signal.
Clause 22. The battery system (200) of Clause 21, wherein the supervisory circuit (228) is configured to communicate the digital signal to the battery management system (208).
Clause 23. The battery system (200) of any of Clauses 12 to 22, further comprising a second plurality of battery modules (206) arranged to define a second battery string (204) defining a second output voltage, wherein the second battery string (204) is arranged electrically in parallel to the battery string (204) via a second string switch (214).
Clause 24. The battery system (200) of Clause 23, wherein the battery management system (208) is configured to electrically couple the second battery string (204) with the battery bus (210) via the second string switch (214).
Clause 25. The battery system (200) of any of Clauses 12 to 24, wherein the battery management system (208) is configured to electrically couple the battery string (204) with the battery bus (210) via a pre-charge circuit (316) configured to perform a pre-charge cycle.
Clause 26. The battery system (200) of Clause 25, wherein the pre-charge circuit (316) comprises a pre-charge switch (316a) that is coupled electrically in series with a pre-charge resistor (316b) to limit current flow through the pre-charge switch (316a).
Clause 27. The battery system (200) of any of Clauses 18 to 26, wherein the solid-state switch is a silicon carbide metal-oxide-semiconductor field-effect transistor (MOSFET).
Clause 28. The battery system (200) of any of Clauses 19 to 26, wherein the solid-state switch is a silicon carbide metal-oxide-semiconductor field-effect transistor (MOSFET).
Clause 29. The battery system (200) of any of Clauses 12 to 28, wherein the battery management system (208) is configured to switch the one or more switches in a break-before-make (BBM) arrangement.
Clause 30. A battery system (200) comprising:
   a first plurality of battery modules (206) arranged in series to define a first battery string (204) having an first output voltage;
   a second plurality of battery modules (206) arranged to define a second battery string (204) defining a second output voltage, wherein the second battery string (204) is arranged electrically in parallel to the first battery string (204) via a second string switch (214),
   wherein each of the first and second pluralities of battery modules (206) comprises a supervisory circuit (228), one or more cell packs (224), and one or more switches (238) to electrically connect the one or more cell packs (224) to its respective first or second battery string (204); and
   a battery management system (208) to selectively switch, for each of the plurality of battery modules, the one or more switches (238) between a first position that electrically places the one or more cell packs (224) in series with its respective first or second battery string (204) and a second position that electrically bypasses the one or more cell packs (224) from the its respective first or second battery string (204), wherein the battery management system (208) is configured to:
      identify a first battery module (206) from the first plurality of battery modules (206) to bypass from the first battery string (204),
      identify a second battery module (206) from the first plurality of battery modules (206) to place in series with the first battery string (204),
      switch the one or more switches (238) of the first battery module (206) to the second position, and
      switch the one or more switches (238) of the second battery module (206) to the first position.
Clause 31. The battery system (200) of Clause 30, wherein each of the one or more cell packs (224) comprises two or more battery cells (220) arranged electrically in parallel.
Clause 32. The battery system (200) of Clause 30 or Clause 31, wherein the battery management system (208) is configured to identify a defective battery module (206b) among the plurality of battery modules (206), wherein the first battery module (206) is the defective battery module (206b).
Clause 33. The battery system (200) of any of Clauses 30 to 32, wherein the supervisory circuit (228) comprises a current sensor (314) and an analog-to-digital converter (ADC) (312), wherein the current sensor (314) is configured to output an analog signal representing current flow through the one or more cell packs (224) and the ADC (312) is configured to convert the analog signal to a digital signal.
Clause 34. The battery system (200) of any of Clauses 30 to 33, wherein the battery management system (208) is configured to electrically couple the first battery string (204) or the second battery string (204) with a battery bus (210) via a pre-charge circuit (316) configured to perform a pre-charge cycle.
Clause 35. The battery system (200) of Clause 34, wherein the pre-charge circuit (316) comprises a pre-charge switch (316a) that is coupled electrically in series with a pre-charge resistor (316b) to limit current flow through the pre-charge switch (316a).
Clause 36. The battery system (200) of any of Clauses 30 to 35, wherein each of the one or more switches (238) is a silicon carbide metal-oxide-semiconductor field-effect transistor (MOSFET).
Clause 37. The battery system (200) of any of Clauses 30 to 36, wherein the string switch (214) is a silicon carbide metal-oxide-semiconductor field-effect transistor (MOSFET).
Clause 38. The battery system (200) of any of Clauses 30 to 37, wherein the second battery module (206) is a reserve battery module (206c).

While the various battery power systems and methods are generally described in connection with an aircraft, they may be applied to virtually any industry where a reconfigurable battery system is desired. In addition, the order or presentation of method steps is not intended to require this order of performing the recited steps unless a particular order is expressly required or otherwise clear from the context. Thus, while particular embodiments have been shown and described, it will be apparent to those skilled in the art that various changes and modifications in form and details may be made therein without departing from the spirit and scope of this disclosure and are intended to form a part of the invention as defined by the following claims, which are to be interpreted in the broadest sense allowable by law. It will be appreciated that the methods and systems described above are set forth by way of example and not of limitation. Numerous variations, additions, omissions, and other modifications will be apparent to one of ordinary skill in the art.

## Claims

1. A method for controlling a battery system (200) comprising a plurality of battery modules (206) arranged in series to define a battery string (204), each of the plurality of battery modules (206) comprising a supervisory circuit (228), one or more cell packs (224), and one or more switches (238) to electrically connect the one or more cell packs (224) to the battery string (204), and a battery management system (208) to selectively switch, for each of the plurality of battery modules, the one or more switches (238) between a first position that electrically places the one or more cell packs (224) in series with the battery string (204) and a second position that electrically bypasses the one or more cell packs (224) from the battery string (204), the method comprising:
identifying a first battery module (206) from the plurality of battery modules (206) to bypass from the battery string (204),
identifying a second battery module (206) from the plurality of battery modules (206) to place in series with the battery string (204),
switching the one or more switches (238) of the first battery module (206) to the second position, and
switching the one or more switches (238) of the second battery module (206) to the first position.

2. The method of claim 1, wherein each of the one or more cell packs (224) comprises two or more battery cells (220) arranged electrically in parallel.

3. The method of claim 1 or claim 2, further comprising the step of connecting the battery string (204) with a battery bus (210) via a pre-charge circuit (316), wherein the pre-charge circuit (316) comprises a pre-charge switch (316a) that is coupled electrically in series with a pre-charge resistor (316b) to limit current flow through the pre-charge switch (316a).

4. The method of any of claims 1 to 3, further comprising the step of identifying a defective battery module (206b) among the plurality of battery modules (206), wherein the first battery module (206) is the defective battery module (206b).

5. The method of claim 4, wherein the second battery module (206) is a reserve battery module (206c).

6. The method of any of claims 1 to 5, further comprising the steps of converting, via an analog-to-digital converter (ADC) (312) of the supervisory circuit (228), an analog signal representing current flow through the one or more cell packs (224) to a digital signal, and communicating the digital signal to the battery management system (208).

7. A battery system (200) comprising:
a plurality of battery modules (206) arranged in series to define a battery string (204), each of the plurality of battery modules (206) comprising a supervisory circuit (228), one or more cell packs (224), and one or more switches (238) to electrically connect the one or more cell packs (224) to the battery string (204); and
a battery management system (208) to selectively switch, for each of the plurality of battery modules, the one or more switches (238) between a first position that electrically places the one or more cell packs (224) in series with the battery string (204) and a second position that electrically bypasses the one or more cell packs (224) from the battery string (204), wherein the battery management system (208) is configured to electrically couple the battery string (204) with a battery bus (210) via a string switch (214), and
wherein the battery management system (208) is configured to:
identify a first battery module (206) from the plurality of battery modules (206) to bypass from the battery string (204),
identify a second battery module (206) from the plurality of battery modules (206) to place in series with the battery string (204),
switch the one or more switches (238) of the first battery module (206) to the second position, and
switch the one or more switches (238) of the second battery module (206) to the first position.

8. The battery system (200) of claim 7, wherein each of the one or more cell packs (224) comprises two or more battery cells (220) arranged electrically in parallel.

9. The battery system (200) of claim 7 or claim 8, wherein the battery management system (208) selects the second battery module (206) to substantially maintain an output voltage of the battery string (204).

10. The battery system (200) of claim 9, wherein the second battery module (206) is a reserve battery module (206c).

11. The battery system (200) of any of claims 7 to 10, wherein the battery management system (208) is configured to identify a defective battery module (206b) among the plurality of battery modules (206).

12. The battery system (200) of any of claims 7 to 11, wherein the supervisory circuit (228) comprises a current sensor (314) and an analog-to-digital converter (ADC) (312), wherein the current sensor (314) is configured to output an analog signal representing current flow through the one or more cell packs (224) and the ADC (312) is configured to convert the analog signal to a digital signal.

13. The battery system (200) of any of claims 7 to 12, further comprising a second plurality of battery modules (206) arranged to define a second battery string (204) defining a second output voltage, wherein the second battery string (204) is arranged electrically in parallel to the battery string (204) via a second string switch (214).

14. The battery system (200) of any of claims 7 to 13, wherein the battery management system (208) is configured to electrically couple the battery string (204) with the battery bus (210) via a pre-charge circuit (316) configured to perform a pre-charge cycle.

15. The battery system (200) of claim 14, wherein the pre-charge circuit (316) comprises a pre-charge switch (316a) that is coupled electrically in series with a pre-charge resistor (316b) to limit current flow through the pre-charge switch (316a).
